# FASCICULE DE BREVET EUROPEEN

(11) **EP 0 446 334 B1**
(45) Date de publication et mention de la délivrance du brevet: **24.05.1995**
(21) Numéro de dépôt: 90914940.3
(22) Date de dépôt: 25.09.1990
(51) Int. Cl.: H04N 5/76, H04N 5/45, H04N 5/782

(54) **DISPOSITIF DE PROGRAMMATION D'ENREGISTREMENT PAR RECONNAISSANCE DE SIGNAUX DE REFERENCE**
VORRICHTUNG ZUR AUFZEICHNUNGSPROGRAMMIERUNG DURCH ERKENNUNG VON REFERENZSIGNALEN
DEVICE FOR PROGRAMMED RECORDING BY RECOGNITION OF REFERENCE SIGNALS

(30) Priorité: 03.10.1989 FR 8912891
(43) Date de publication de la demande: 18.09.1991
(73) Titulaire: THOMSON multimedia, 92400 Courbevoie (FR)
(72) Inventeur: MICHERON, François, F-91190 Gif-sur-Yvette (FR); POTIER, Dominique, F-92310 Sèvres (FR); REFREGIER, Philippe, F-91120 Palaiseau (FR)
(74) Mandataire: Ruellan-Lemonnier, Brigitte
(86) Numéro de dépôt international: FR9000686
(87) Numéro de publication internationale: WO9105437

(56) Documents cités:
- EP-A- 0 256 152
- US-A- 4 845 564
- IEEE Transactions on Consumer Electronics, Volume 33, No. 3, Aout 1987, (New York, US) M. MASUDA et al.: "Picture in Picture System with a Digital Memory for vcrs", pages 230-238 voir pages 1-3, colonne 1, ligne 2; figures 1-3

## Description

Le domaine de la présente demande concerne la programmation d'un magnétophone ou d'un magnétoscope dans sa fonction d'enregistrement.

La programmation d'enregistrement d'un magnétoscope est habituellement réalisée en sélectionnant une date et une heure. Il est donc implicitement supposé que le programme à enregistrer sera diffusé ou distribué à la date et à l'heure prévues. L'expérience montre toutefois que cette programmation ne peut être réalisée au mieux qu'à quelques minutes près, ce qui se traduit soit par un manque au début de l'émission enregistrée, soit par l'enregistrement de séquences indésirées.

Le problème est d'autant plus crucial que la programmation comporte davantage de séquences successives constituées chacune d'une période d'enregistrement suivie d'une pause.

L'objectif de l'invention est notamment de pallier cet inconvénient.

Plus précisément, l'invention a pour objectif de fournir un dispositif d'enregistrement sélectif de séquences audiovisuelles, qui soit actionné aux moments exacts de commencement ou de fin de la séquence audiovisuelle enregistrée.

Un autre objectif de l'invention est de fournir un tel dispositif qui puisse être mis en oeuvre à coût réduit et avec une bonne efficacité de fonctionnement, dans des systèmes d'enregistrement audiovisuels de type grand public.

Ces objectifs, ainsi que d'autres qui apparaîtront par la suite, sont atteints à l'aide d'un dispositif de pilotage d'un appareil d'enregistrement sélectif par un circuit de reconnaissance d'une séquence audio et/ou vidéo à partir d'un jeu de séquences reçues, caractérisé en ce qu'il comprend :
- des moyens de réduction de signaux d'information audio et/ou vidéo des séquences reçues ;
- des moyens de stockage des signaux d'information audio et/ou vidéo réduite représentant une portion de référence audio et/ou vidéo dans ladite séquence audio et/ou vidéo à enregistrer ;
- des moyens de comparaison desdits signaux d'information audio et/ou vidéo réduite stockée avec des informations audio et/ou vidéo réduites prélevées dans le jeu de séquences reçues ;
- des moyens de commande dudit appareil d'enregistrement, activés par lesdits moyens de comparaison lors de la reconnaissance de ladite portion de référence audio et/ou vidéo dans ledit jeu de séquences reçues.

L'invention concerne également un dispositif caractérisé en ce que l'appareil d'enregistrement est un appareil d'enregistrement de séquences d'images et le jeu de séquences reçues est un jeu de séquences d'images électroniques :
- les moyens de réduction étant des moyens de réduction de signaux d'information d'image d'au moins une image de référence appartenant à ladite séquence à enregistrer ;
- les moyens de commande dudit appareil d'enregistrement étant activés par lesdites moyens de comparaison lors de la reconnaissance d'un image similaire à ladite image de référence dans ledit jeu de séquences reçues.

L'invention concerne aussi un dispositif caractérisé en ce que lesdits moyens de réduction des signaux d'information d'image comprennent :
- soit des moyens ayant pour fonction de réduire le niveau d'au moins un des signaux de luminance et/ou de chrominance de l'image ;
- soit des moyens ayant pour fonction de sous-échantillonner l'image ou de l'une des trames de l'image ;
- soit des moyens ayant pour fonction de prélever une portion d'image dans l'image ;
- soit des moyens ayant pour fonction de découper l'image en blocs d'image en associant à chaque bloc la valeur moyenne de l'information de luminance des pixels dudit bloc d'image.

L'invention concerne enfin un dispositif caractérisé en ce qu'il comporte :
- des moyens de prélèvement d'images dans ledit jeu de séquences ;
- des moyens de numérisation desdites images prélevées ;
- lesdits moyens de réduction des signaux d'information d'image recevant lesdites images numérisées prélevées.

D'autre part, les images sont avantageusement prélevées dans ledit jeu de séquences d'images à une fréquence inférieure à la fréquence image, ou à la fréquence trame.

Dans un mode de réalisation préférentiel, lesdits moyens de comparaison comprennent une porte logique unique recevant en entrée les éléments d'information réduite de l'image de référence stockée et les éléments d'une image prélevée dans ledit jeu de séquences, synchronisées dans l'ordre de balayage, cette porte logique fournissant en sortie une information positive de reconnaissance pour chaque paire d'éléments identiques d'information d'image réduite reçue en entrée. Ces moyens de comparaison comprennent avantageusement un compteur incrémenté à chaque fois que ladite porte logique fournit une information positive de reconnaissance.

Dans ce cas, lesdits moyens de commande dudit appareil d'enregistrement sont activés à chaque fois que, pour une image prélevée, ledit compteur franchit un seuil prédéterminé.

Dans un autre mode de réalisation, lesdits moyens de comparaison fonctionnent comme un corrélateur par transformée de Fourier ou un réseau neuronal à apprentissage.

L'invention concerne également un dispositif caractérisé en ce qu'il comprend d'une part un circuit de reconnaissance d'images, et d'autre part un circuit de reconnaissance d'un signal audio, et en ce que des moyens d'enregistrement d'un signal audiovisuel sont actionnés soit lors de la reconnaissance simultanée d'une image de référence et d'un son de référence dans le signal reçu, soit lors de la reconnaissance d'au moins une image ou un son de référence. Les moyens de comparaison du signal audio comprennent avantageusement des moyens d'échantillonnage d'un signal audio reçu, et des moyens de comparaison des signaux échantillonnés avec une portion de signal audio de référence préalablement mémorisée.

On notera que le mode de réalisation à reconnaissance simultanée des signaux vidéo et audio permet d'éviter l'enregistrement intempestif de séquences non souhaitées. Inversement, lorsque le dispositif d'enregistrement peut être actionné par au moins l'un des deux systèmes de reconnaissance, on pallie les risques de défaillance des moyens de reconnaissance dûs par exemple au brouillage du signal reçu ou à toute autre cause d'effets analogues.

Le document EP - A - 0 256 152 décrit un procédé de génération d'un signal de commande, servant en particulier à déclencher un enregistrement, suite à la reconnaissance d'un mot de données d'identification transmis avec le signal vidéo.

D'autres caractéristiques et avantages de l'invention apparaîtront à la lecture de modes suivants de réalisation préférentiels de l'invention, donnés à titre illustratif et non limitatif, et des dessins annexés dans lesquels :
- la figure 1 représente un schéma synoptique d'un dispositif de reconnaissance d'image, selon l'invention;
- la figure 2 est un schéma bloc détaillant un mode de réalisation préférentiel du circuit comparateur d'image de la figure 1;
- la figure 3 est un schéma synoptique illustrant la mise en oeuvre de l'invention dans le cas où le dispositif comprend d'une part un circuit de reconnaissance d'image et d'autre part un circuit de reconnaissance de son.

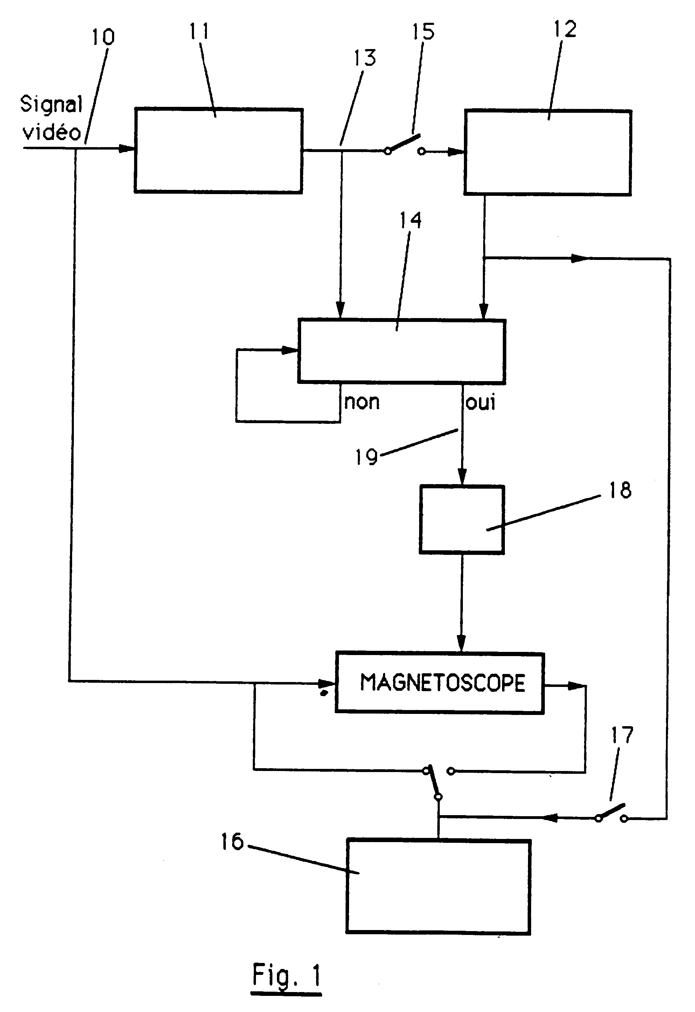

Comme représenté en fig 1, le dispositif de l'invention comporte avantageusement les modules suivants, dans un mode de réalisation préférentiel :
- un module 11 de réduction du "format" des images 10, de façon à produire une information d'image réduite 13.

Dans le cas où, par exemple, l'image est formée d'un signal vidéo 10 au format de 625 lignes, de 400 points résolus par ligne, trichromes, codés sur 7 bits, l'information d'image réduite 13 peut être ramenée à 64 x 64 pixels, monochromes (signaux de luminance uniquement), codés sur 3 ou 4 niveaux. Cette réduction de format peut être effectuée par calcul de moyennes des intensités de luminance des pixels dans des blocs découpés régulièrement dans l'image d'origine pour la réduire à une matrice 64x64, ou encore par échantillonage de 64x64 pixels soit dans l'image complète, soit encore dans l'une des deux demi-trames entrelacées.

De tels circuits de réduction de format sont par exemple utilisés pour l"'incrustation" de petites images dans l'image principale du téléviseur.

La réduction de nombre de niveaux de luminance est faite avantageusement par comparaison à des seuils de niveau.

Plutôt que de réduire le format de l'image, il est également possible de ne considérer pour le stockage et pour la comparaison qu'une partie de l'image (le centre de l'image par exemple), de façon à sélectionner le même nombre réduit de bits.
- une mémoire d'image 12 stockant l'information d'image 13 dans le format réduit : c'est dans cette mémoire 12 qu'est stockée l'image de référence à reconnaître.

De façon avantageuse, dans le cas où le module 11 de réduction du format d'image est utilisé en continu pour traiter le signal vidéo 10, le stockage de l'image de référence est par exemple effectué en fermant un interrupteur 15.

L'image de référence stockée en mémoire 12 peut également être visionnée dans l'écran vidéo 16 de projection des émissions, par fermeture d'un interrupteur 17. Cette opération correspond par exemple à un contrôle de sélection de l'image de référence mémorisée.
- un comparateur d'images 14, qui, en temps réel, compare avec l'image enregistrée en mémoire 12, les images successives, en format réduit, du programme télévisé 10.

Ce comparateur 14 peut ne pas travailler sur les 25 (ou 30) images par seconde, mais sur une image ou une trame d'image, saisie une fois par seconde par exemple.

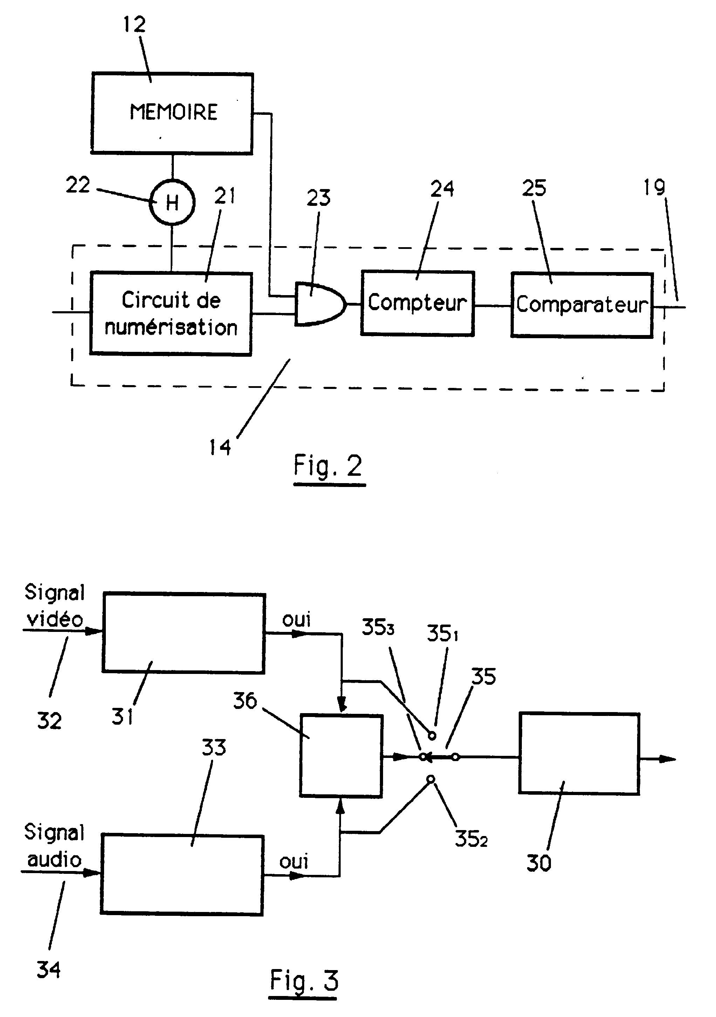

Comme représenté en fig 2, le comparateur 14 comporte avantageusement tout d'abord un circuit de numérisation 21, qui, dans le cas d'une réduction de format à 64x64 pixels à 3 niveaux, produit des mots de 64x64x3 digits.

Ce mot est comparé digit par digit au mot correspondant à l'image enregistrée au moyen de portes logiques. On notera que puisque les images sont inscrites séquentiellement sur l'écran 16, point après point dans une ligne, et ligne après ligne pour une des demi-trames entrelacées, la comparaison se fait de préférence séquentiellement entre digits de l'information réduite des images défilantes et digits de l'image stockée. La mémoire d'image 12 doit donc être lue séquentiellement, à la cadence vidéo fournie par l'horlogerie 22 du dispositif, et dans le même ordre que celui utilisé pour présenter les images défilantes. Dans ces conditions, une seule porte logique 23 suffit, qui délivre le digit 1 lorsqu'elle reçoit simultanément 2 digits 1 ou 2 digits 0 sur des entrées. Les digits en sortie de la porte 23 sont comptés dans un compteur 24, et, lorsque, pour une image donnée, la porte 23 a fourni 64x64x3 digits "1" environ, il y a reconnaissance de l'image recherchée. Plus précisément, le compteur 24 alimente avantageusement un comparateur 25 à seuil prédéterminé, le seuil correspondant à un taux de digits reconnus au delà duquel on considère que l'image de référence a été reconnue dans la séquence défilante.

On remarquera que les procédés de réduction de format et de reconnaissance d'images ne sont donnés ici qu'à titre d'exemple. Il est clair que plus la réduction du format opérée par le module 11 est faible, plus le comparateur 14 est simple , et plus il doit fonctionner vite. Il est possible que pour certains modes de réalisation le minimum de coût du dispositif module 11 + comparateur 14 soit obtenu pour une réduction de format encore plus importante et un système de reconnaissance d'image plus élaboré. Ce système pourrait par exemple fonctionner comme un corrélateur par transformée de Fourier ou un réseau neuronal à apprentissage, etc...
- un actionneur 18, commandé par la sortie 19 des moyens de comparaison 14 lorsque que celle-ci correspond à une information positive de reconnaissance et programmé selon l'action à déclencher au passage de l'image identique à l'image mémorisée.

Le fonctionnement du dispositif de la fig 1 peut être particulièrement illustré par l'exemple de la reconnaissance d'une image générique d'émission télévisée destinée à être enregistrée sur un magnétoscope domestique. Encore que les images génériques, ainsi que les messages musicaux qui les accompagnent (jingle) soient complexes, le problème de leur reconnaissance est en principe simple, puisqu'elles sont toujours identiques à elles mêmes, et qu'en général, le rapport signal à bruit est très bon.

Les opérations d'analyse et de reconnaissance décrites jusqu'ici pour les images peuvent être appliquées au message musical accompagnant l'image générique.

Quelques secondes du début du signal audio correspondant peuvent être échantillonnées à la fréquence de quelques kHz, sur trois à quatre niveaux (1 seconde à 3 kHz et 4 niveaux = 12 kbits, contre 64x64x3 = 12288 bits de l'exemple précédent, soit le même ordre de grandeur).

Comme représenté en fig 3, l'action programmée pour le magnétoscope peut alors être déclenchée soit par l'image recherchée, soit par le message musical l'accompagnant, soit par les deux.

Dans le dispositif schématisé en fig 3, l'actionneur 30 est piloté :
- soit par un circuit 31 du type de celui de la fig 1 et comprenant un réducteur d'information d'image, et un comparateur à une information réduite d'image de référence préalablement mémorisée. Ce circuit 31 est alimenté par le signal vidéo 32 intégral ou échantillonné.
- soit par un circuit 33 de reconnaissance d'une portion de signal audio dans un signal audio reçu 34. Ce circuit 33 comprend avantageusement des moyens d'échantillonage de signal reçu 34 et des moyens de comparaison des signaux échantillonnés avec une position de signal audio de référence préalablement mémorisée.

Avantageusement, ce dispositif comprend un commutateur 35, grâce auquel l'utilisateur peut piloter l'actionneur sélectivement :
- soit par le circuit 31 de reconnaissance d'image seul (35*₁*)
- soit par le circuit 32 de reconnaissance de son seul (35*₂*)
- soit par la conjonction de reconnaissance par les deux circuits, ou encore la reconnaissance d'au moins une des deux informations (35*₃*). Dans ce cas, le circuit logique 36 est un circuit ET ou un circuit OU inclusif respectivement.

Dans le cas de réception de plusieurs programmes télévisés (ou canaux, ou chaînes) la programmation des enregistrements correspondants nécessite le stockage d'au moins une image par programme. Ces images sont alors avantageusement stockées dans au moins autant de mémoires qu'il y a de canaux, et indexées à ces canaux. Cette image (ou ces images) indexée(s) à un canal est (sont) appelée(s) automatiquement lors de la programmation concernant ledit canal.

Bien entendu, dans un mode de réalisation sophistiqué de l'invention, la programmation doit permettre à l'utilisateur de débuter ou d'arrêter l'enregistrement à l'apparition de l'image recherchée, d'arrêter et de recommencer l'enregistrement aux apparitions successives de la même image etc...

On peut noter que le principe de la reconnaissance d'une séquence musicale peut être employé pour la programmation d'un magnétophone chargé du seul enregistrement audio de la séquence reçue. Ce cas correspond au positionnement de l'interrupteur 35 en 35*₂*, l'actionneur 30 pilotant alors le magnétophone d'enregistrement concerné.

## Revendications

1. Dispositif de pilotage d'un appareil d'enregistrement sélectif par un circuit de reconnaissance d'une séquence audio et/ou vidéo à partir d'un jeu de séquences reçues, caractérisé en ce qu'il comprend :
- des moyens (11) de réduction des signaux d'information audio et/ou vidéo des séquences reçues ;
- des moyens (12) de stockage des signaux d'information audio et/ou vidéo réduite représentant une portion de référence audio et/ou vidéo dans ladite séquence audio et/ou vidéo à enregistrer ;
- des moyens (14) de comparaison desdits signaux d'information réduite stockée avec des informations audio et/ou vidéo réduites prélevées dans le jeu de séquences reçues ;
- des moyens (18) de commande dudit appareil d'enregistrement, activés par lesdits moyens de comparaison lors de la reconnaissance de ladite portion de référence audio et/ou vidéo dans ledit jeu de séquences reçues.

2. Dispositif selon la revendication 1, caractérisé en ce que l'appareil d'enregistrement est un appareil d'enregistrement de séquences d'images et le jeu de séquences reçues est un jeu de séquences d'images électroniques :
- les moyens (11) de réduction étant des moyens de réduction de signaux d'information d'image d'au moins une image de référence appartenant à ladite séquence à enregistrer ;
- les moyens (18) de commande dudit appareil d'enregistrement étant activés par lesdites moyens de comparaison lors de la reconnaissance d'un image similaire à ladite image de référence dans ledit jeu de séquences reçues.

3. Dispositif selon la revendication 2, caractérisé en ce que lesdits moyens (11) de réduction de signaux d'information d'image comprennent :
- soit des moyens ayant pour fonction de réduire le niveau d'au moins un des signaux de luminance et/ou de chrominance de l'image ;
- soit des moyens ayant pour fonction de sous-échantillonner l'image ,ou l'une des trames de l'image ;
- soit des moyens ayant pour fonction de prélever une portion d'image dans l'image ;
- soit de découper l'image en blocs d'image en associant à chaque bloc la valeur moyenne de l'information de luminance des pixels dudit bloc d'image.

4. Dispositif selon l'une quelconque des revendications 2 à 3, caractérisé en ce qu'il comporte :
- des moyens de prélèvement d'images dans ledit jeu de séquences ;
- des moyens (21) de numérisation desdites images prélevées;
- lesdits moyens (11) de réduction des signaux d'information d'image recevant lesdites images numérisées prélevées.

5. Dispositif selon la revendication 4, caractérisé en ce que des images sont prélevées dans ledit jeu de séquences d'images à une fréquence inférieure à la fréquence image, ou à la fréquence trame.

6. Dispositif selon l'une quelconque des revendications 2 à 5, caractérisé en ce que lesdits moyens de comparaison (14) comprennent une porte logique unique (23) recevant en entrée les éléments d'information réduite d'image de l'image de référence stockée et les éléments d'une image prélevée dans ledit jeu de séquences, synchronisées dans l'ordre de balayage, cette porte logique (23) fournissant en sortie une information positive de reconnaissance pour chaque paire d'éléments identiques d'information d'image réduite reçue en entrée.

7. Dispositif selon la revendication 6, caractérisé en ce que lesdits moyens de comparaison comprennent un compteur (24) incrémenté à chaque fois que ladite porte logique fournit une information positive de reconnaissance.

8. Dispositif selon la revendication 7, caractérisé en ce que lesdits moyens de commande (18) dudit appareil d'enregistrement sont activés à chaque fois que, pour une image prélevée, ledit compteur (24) franchit un seuil prédéterminé.

9. Dispositif selon l'une quelconque des revendications 2 à 5, caractérisé en ce que lesdits moyens de comparaison (14) fonctionnent comme un corrélateur par transformée de Fourier ou un réseau neuronal à apprentissage.

10. Dispositif selon la revendication 1, caractérisé en ce qu'il comprend également d'une part un circuit (31) de reconnaissance d'images, et d'autre part un circuit (33) de reconnaissance d'un signal audio, et en ce que des moyens (30) de commande d'enregistrement d'un signal audiovisuel sont actionnés soit lors de la reconnaissance simultanée d'une image de référence et d'un son de référence dans le signal reçu, soit lors de la reconnaissance d'au moins une image ou un son de référence.

11. Dispositif selon la revendication 10, caractérisé en ce que lesdits moyens de reconnaissance d'un signal de son comprennent des moyens d'échantillonnage d'un signal audio reçu, et des moyens de comparaison des signaux échantillonnés avec une portion de signal audio de référence préalablement mémorisée.

## Patentansprüche

1. Vorrichtung für die Steuerung eines Gerätes für die selektive Aufzeichnung einer Audio- und/oder Videosequenz aus einer Reihe von empfangenen Sequenzen mittels einer Schaltung für die Erkennung, gekennzeichnet dadurch, daß sie umfaßt:
- Mittel (11) für die Reduktion der Signale mit Audio- und/oder Videoinformation der empfangenen Sequenzen;
- Mittel (12) für die Speicherung der Signale mit reduzierter Audio- und/oder Videoinformation, welche einen Audio- und/oder Video-Referenzabschnitt in der besagten aufzuzeichnenden Audio- und/oder Videosequenz darstellen;
- Mittel (14) für den Vergleich der besagten Signale der gespeicherten reduzierten Audio- und/oder Videoinformation mit reduzierten Audio- und/oder Videoinformationen, welche aus der Reihe der empfangenen Sequenzen entnommen werden;
- Mittel (18) für die Steuerung des besagten Aufzeichnungsgerätes, die beim Erkennen des besagten Audio- und/oder Video-Referenzabschnittes in der besagten Reihe von empfangenen Sequenzen durch die besagten Mittel für den Vergleich aktiviert werden.

2. Vorrichtung nach Anspruch 1, gekennzeichnet dadurch, daß das Aufzeichnungsgerät ein Aufzeichnungsgerät für Bildsequenzen ist und die Reihe von empfangenen Sequenzen eine Reihe von elektronischen Bildsequenzen ist:
- wobei es sich bei den Mitteln (11) für die Reduktion um Mittel für die Reduktion von Signalen mit Bildinformation von wenigstens einem Referenzbild, welches zu der besagten aufzuzeichnenden Sequenz gehört, handelt;
- wobei die Mittel (18) für die Steuerung des besagten Aufzeichnungsgerätes durch die besagten Mittel für den Vergleich aktiviert werden, wenn in der besagten Reihe von empfangenen Sequenzen ein Bild erkannt wird, das dem besagten Referenzbild ähnlich ist.

3. Vorrichtung nach Anspruch 2, gekennzeichnet dadurch, daß die besagten Mittel (11) für die Reduktion der Signale mit Bildinformation umfassen:
- entweder Mittel, die dazu bestimmt sind, den Pegel wenigstens eines der Luminanz- und/oder Chrominanz-Signale des Bildes zu reduzieren;
- oder Mittel, die dazu bestimmt sind, dem Bild oder einem der Teilbilder des Bildes Stichproben zu entnehmen;
- oder Mittel, die dazu bestimmt sind, einen Bildausschnitt aus dem Bild zu entnehmen;
- oder Mittel, die dazu bestimmt sind, das Bild in Bildblöcke zu zerlegen und dabei jedem Block den Mittelwert der Information der Luminanz der Bildpunkte des besagten Bildblockes zuzuordnen.

4. Vorrichtung nach einem der Ansprüche 2 bis 3, gekennzeichnet dadurch, daß sie umfaßt:
- Mittel für die Entnahme von Bildern aus der besagten Reihe von Sequenzen;
- Mittel für die Digitalisierung (21) der besagten entnommenen Bilder;
- die besagten Mittel (11) für die Reduktion der Signale mit Bildinformation, welche die besagten digitalisierten entnommenen Bilder empfangen.

5. Vorrichtung nach Anspruch 4, gekennzeichnet dadurch, daß die Bilder aus der besagten Reihe von Bildsequenzen mit einer Frequenz entnommen werden, die niedriger ist als die Bildfrequenz oder als die Teilbildfrequenz.

6. Vorrichtung nach einem der Ansprüche 2 bis 5, gekennzeichnet dadurch, daß die besagten Mittel für den Vergleich (14) eine einzige Torschaltung (23) umfassen, welche als Eingang die Elemente der gespeicherten reduzierten Bildinformation des Referenzbildes und die Elemente eines aus der besagten Reihe von Sequenzen entnommenen Bildes empfängt, synchronisiert in der Reihenfolge der Abtastung, und wobei diese Torschaltung (23) für jedes Paar von identischen Elementen mit reduzierter Bildinformation, die sie als Eingang empfangen hat, als Ausgang eine positive Erkennungsinformation liefert.

7. Vorrichtung nach Anspruch 6, gekennzeichnet dadurch, daß die besagten Mittel für den Vergleich einen Zähler (24) umfassen, der jedesmal, wenn die besagte Torschaltung eine positive Erkennungsinformation liefert, inkrementiert wird.

8. Vorrichtung nach Anspruch 7, gekennzeichnet dadurch, daß die besagten Mittel für die Steuerung (18) des besagten Aufzeichnungsgerätes jedesmal aktiviert werden, wenn der besagte Zähler (24) für ein entnommenes Bild einen vorgegebenen Schwellenwert überschreitet.

9. Vorrichtung nach einem der Ansprüche 2 bis 5, gekennzeichnet dadurch, daß die besagten Mittel für den Vergleich (14) wie ein Fourier-Transformierten-Korrelator oder wie ein lernendes Neuronen-Netz funktionieren.

10. Vorrichtung nach Anspruch 1, gekennzeichnet dadurch, daß sie außerdem einerseits eine Schaltung (31) für die Erkennung von Bildern und andererseits eine Schaltung (33) für die Erkennung eines Audiosignals umfaßt, und dadurch, daß entweder beim gleichzeitigen Erkennen eines Referenzbildes und eines Referenztons in dem empfangenen Signal oder beim Erkennen wenigstens eines Referenzbildes oder Referenztones Mittel (30) für die Aufzeichnung eines audiovisuellen Signals betätigt werden.

11. Vorrichtung nach Anspruch 10, gekennzeichnet dadurch, daß die besagten Mittel für das Erkennen eines Tonsignals Mittel für die Stichprobenentnahme aus einem empfangenen Audiosignal und Mittel für den Vergleich der entnommenen Signale mit einem zuvor gespeicherten Abschnitt eines Referenz-Audiosignals umfassen.

## Claims

1. A control device for an apparatus for the selective recording, by means of a recognition circuit, of an audio and/or video sequence from a set of sequences received, characterised in that it comprises:
- a means (11) of reducing the audio and/or video information signals of the sequences received;
- a means (12) of storing the reduced-information audio and/or video signals representing an audio and/or video reference portion in the audio and/or video sequence to be recorded;
- a means (14) of comparing such stored reduced-information audio and/or video signals with reduced audio and/or video information packets obtained by sampling the set of sequences received;
- a means (18) of controlling the recording apparatus, actuated by the means of comparison when such audio and/or video reference portion in the set of sequences received is recognised.

2. A device in accordance with claim 1, characterised in that the recording apparatus is an apparatus for recording sequences of images and that the set of images received is a set of sequences of electronic images:
- the means (11) of reduction being a means of reduction of image information signals with at least one reference image belonging to the sequence to be recorded;
- the means (18) of controlling the apparatus being actuated by the means of comparison when an image similar to the reference image is recognised in the set of images received.

3. A device in accordance with claim 2, characterised in that the means (11) of reducing image information signals comprise:
- a means whereby the level of at least one of the signals of brightness and/or colour intensity of the image can be reduced;
- or a means whereby the image or one of the frames of the image can be subsampled;
- or a means whereby a portion of image within the image can be sampled;
- or a means whereby the image can be cut into image blocks, associating with each block the mean value of the brightness information of the pixels of the block of the image.

4. A device in accordance with either of claims 2 or 3, characterised in that it comprises:
- a means of sampling images in the given set of sequences;
- a means (21) of numbering the sampled images;
- the means (11) of reducing the image information signals receiving the numbered sampled images.

5. A device in accordance with claim 4, characterised in that the images are sampled in the set of image sequences at a frequency lower than the image frequency or the frame frequency.

6. A device in accordance with any of claims 2 through 5, characterised in that the means of comparison (14) comprise a single logical gate (23) receiving as input the reduced image information elements of the stored reference image and the elements of a sampled image from the given set of sequences, synchronised in the order of scanning, this logical gate (23) supplying as output a positive-recognition information element for each pair of identical reduced image information elements received as input.

7. A device in accordance with claim 6, characterised in that the means of comparison comprise a counter (24) that is incremented each time the logical gate provides a positive-recognition information element.

8. A device in accordance with claim 7, characterised in that the means of control (18) of the recording apparatus is actuated each time the counter (24) passes a predetermined threshold for a sampled image.

9. A device in accordance with any of claims 2 through 5, characterised in that the means of comparison (14) act as a Fourier transform correlator or as a neural learning network.

10. A device in accordance with claim 1, characterised in that it comprises both an image recognition circuit (31) and an audio signal recognition circuit (33), and in that a means (30) of controlling the recording of an audiovisual signal is actuated either when a reference image and a reference sound in the image received are simultaneously recognised, or when at least one reference image or reference sound is recognised.

11. A device in accordance with claim 10, characterised in that the means of recognizing a sound signal comprise a means of sampling an audio signal received, and a means of comparing the sampled signals with a portion of reference audio signal previously stored in memory.
